# EUROPÄISCHE PATENTSCHRIFT

(11) **EP 1 575 802 B1**
(45) Veröffentlichungstag und Bekanntmachung des Hinweises auf die Patenterteilung: **21.06.2006**
(21) Anmeldenummer: 03767612.9
(22) Anmeldetag: 22.11.2003
(51) Int. Cl.: B60Q 1/34, B60Q 1/26

(54) **NUTZFAHRZEUG, INSBESONDERE LASTKRAFTWAGEN MIT ZUSATZBLINKLEUCHTE**
COMMERCIAL VEHICLE, ESPECIALLY HEAVY GOODS VEHICLE PROVIDED WITH ADDITIONAL INDICATORS
VEHICULE UTILITAIRE, NOTAMMENT CAMION AVEC CLIGNOTANTS SUPPLEMENTAIRES

(30) Priorität: 23.12.2002 DE 10260785
(43) Veröffentlichungstag der Anmeldung: 21.09.2005
(73) Patentinhaber: DaimlerChrysler AG, 70567 Stuttgart (DE)
(72) Erfinder: HOCHER, Gerhard, 72184 Eutingen (DE); FISCHER, Herbert, 71263 Weil der Stadt (DE)
(86) Internationale Anmeldenummer: PCT/EP2003/013135
(87) Internationale Veröffentlichungsnummer: WO 2004/058538

(56) Entgegenhaltungen:
- EP-A- 0 761 502
- EP-A- 1 114 748
- DE-A- 2 920 200
- DE-A- 3 327 588
- DE-A- 10 000 006
- DE-C- 4 014 577
- GB-A- 782 164
- US-A- 2 825 888

## Beschreibung

Die vorliegende Erfindung betrifft ein Nutzfahrzeug, insbesondere einen Lastkraftwagen, mit den Merkmalen des Oberbegriffs des Anspruchs 1.

Zur Erhöhung der Verkehrssicherheit ist es grundsätzlich möglich und in einigen Ländern gesetzlich vorgeschrieben, das Fahrzeug im Bereich des Fahrerhauses an jeder Fahrzeugseite mit wenigstens einer Zusatzblinkleuchte auszustatten, die dabei so ausgestaltet ist, dass sie bei ihrer Betätigung ihr Blinklicht in Richtung Fahrzeugheck abstrahlt.

Mit Hilfe einer solchen Zusatzblinkleuchte kann der nachfolgende Verkehr erheblich besser und insbesondere frühzeitiger einen beabsichtigten Richtungswechsel des damit ausgestatteten Fahrzeugs erkennen, wodurch sich die passive Verkehrssicherheit dieses Fahrzeugs erhöht.

Bei der Herstellung von Lastkraftwagen mit unterschiedlichen Aufbauten oder Aufliegern, ist es zweckmäßig, die Fahrerhäuser mit einer gleichbleibenden Fahrzeugbreite herzustellen, um durch mehr Gleichteile Kosten sparen zu können. Im Unterschied dazu können die Aufbauten oder Auflieger je nach Anwendungsfall unterschiedliche Breiten aufweisen. Wenn nun ein solcher Lastkraftwagen an seinem Fahrerhaus mit Zusatzblinkleuchten der oben beschriebenen Art ausgestattet werden soll, muss ein erhöhter Aufwand betrieben werden, um diese Zusatzblinkleuchten an die jeweilige Breite des Fahrzeugaufbaus oder Aufliegers so anzupassen, damit die erwünschte Blinklichtabstrahlung in Richtung Fahrzeugheck nicht vom jeweiligen Aufbau oder Anlieger verdeckt ist, sondern vielmehr vom nachfolgenden verkehr hinreichend gut erkennbar ist.

Aus der DE 30 44 313 A1, der DE 35 25 198 A1, der DE 40 11 703 C1 und der DE 41 12 794 C1 sind Fahrzeugleuchten bekannt, deren Gehäuse an einer Fahrzeugkarosserie um eine Schwenkachse schwenkbar gehaltert sind, um dadurch die jeweilige Leuchte von einer einzigen Betriebsstellung in eine Wartungsstellung verschwenken zu können. In der Wartungsstellung ergibt sich dann eine erhöhte Zugänglichkeit für die einzelnen Komponenten der jeweiligen Leuchte. Wenn die jeweilige Leuchte in ihre einzige Betriebsstellung zurückgeschwenkt ist, ist sie wieder betriebsbereit.

Aus der DE 25 42 920 A1 und der DE 41 42 582 A1 ist es bekannt, eine Fahrzeugleuchte mit ihrem Gehäuse zum Fußgängerschutz verstellbar an einer Fahrzeugkarosserie zu haltern, derart, dass die jeweilige Leuchte bei einer Kollision nachgeben kann.

Die EP 0 761 502 A1 zeigt eine Sicherheitsvorrichtung für Fahrzeuge, wie Omnibusse und Lastkraftwagen. Die Sicherheitsvorrichtung umfasst ein an einer Außenseite einer Fahrzeugkarosserie befestigbares Gehäuse, das als Tragevorrichtung für einen Rückblickspiegel, einen Rampenspiegel, einen Rückfahrscheinwerfer und eine Blinkleuchte ausgestaltet ist. Dabei kann in einem Verbindungsbereich von Gehäuse und Sockelteil eine Stellvorrichtung angeordnet sein, die über einen motorischen Stellantrieb verfügt. Mit Hilfe dieses Stellantriebs kann die gesamte Sicherheitsvorrichtung, also das Gehäuse um zwei etwa senkrecht zueinander ausgerichtete Schwenkachsen verstellt werden.

Die EP 1 114 748 A2 zeigt eine Beleuchtungsvorrichtung, bei der eine Lampe mit einem Träger an einem Aufbau eines Lastkraftwagens angebracht ist. Dabei ist der Träger über eine seitliche Fahrzeugbegrenzung hinaus ausfahrbar. Mit Hilfe der ausfahrbaren Lampe kann ein Arbeitsbereich oder ein Ladebereich des Fahrzeugs ausgeleuchtet werden.

Die vorliegende Erfindung beschäftigt sich mit dem Problem, für ein Nutzfahrzeug der eingangs genannten Art eine verbesserte Ausführungsform anzugeben, die insbesondere bei Fahrzeugen mit nach hinten abstrahlenden Zusatzblinkleuchten, die Variantenbildung vereinfacht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Zusatzblinkleuchten bezüglich ihres Abstands bzw. bezüglich ihres Abstrahlwinkels gegenüber der jeweiligen Fahrzeugseite verstellbar am Fahrerhaus anzubringen. Durch diese Maßnahme kann ein gleichbleibender Grundtyp des Fahrerhauses für verschieden breite Aufbauten oder Auflieger verwendet werden, da die Zusatzblinkleuchten aufgrund ihrer Verstellbarkeit relativ einfach an die jeweilige Aufbau- bzw. Aufliegerbreite angepasst werden können. Beispielsweise können Adapter oder entsprechend angepasste Konsolen entfallen. Zur Anpassung an die jeweilige Aufbau- oder Aufliegerbreite können die Zusatzblinkleuchten relativ zur jeweiligen Fahrzeugseite verstellt werden. Je breiter der jeweilige Aufbau oder Auflieger, desto größer der einzustellende Abstand bzw. Abstrahlwinkel.

Von besonderem Vorteil ist dabei, dass ein Gehäuse der jeweiligen Zusatzblinkleuchte um eine im Wesentlichen vertikale Schwenkachse schwenkverstellbar am Fahrerhaus gelagert ist. Ein derartiger Aufbau kann besonders preiswert realisiert werden.

Desweiteren ist besonders vorteilhaft, dass die jeweilige Schwenkachse in einem Abschnitt des jeweiligen Gehäuses angeordnet ist, der von einem Lichtaustrittsende des jeweiligen Gehäuses entfernt ist. Auf diese Weise kann durch das Verschwenken des Gehäuses der Abstand bzw. der Abstrahlwinkel zur jeweiligen Fahrzeugseite besonders effektiv verändert werden.

Die erfindungsgemäß vorgeschlagene Anordnung des jeweiligen Gehäuses in einem Übergangsbereich, in dem eine Fahrzeugfront in die jeweilige Fahrzeugseite übergeht, führt vorteilhaft dazu, dass die Zusatzblinkleuchte einen möglichst großen Abstand vom Aufbau bzw. vom Anhänger des Fahrzeugs besitzt, wodurch ein Mindestabstrahlwinkel zur Gewährleistung einer optimalen Erkennbarkeit des Zusatzblinklichts für den nachfolgenden Verkehr vergleichsweise klein sein kann.

Entsprechend einer zweckmäßigen Weiterbildung kann das jeweilige Gehäuse an einem Windleitelement des Fahrerhauses angeordnet sein. Derartige Windleitelemente, insbesondere eine Windleitdüse, sind an einem Fahrerhaus in einem Übergangsbereich zwischen einer Fahrzeugfront und der jeweiligen Fahrzeugseite angeordnet und gegenüber der jeweiligen Fahrzeugseite beabstandet. Durch die Anbringung der Zusatzblinkleuchten an derartigen Windleitelementen ergibt sich für die Zusatzblinkleuchten von selbst eine vorteilhafte exponierte Position, wobei es besonders einfach möglich ist, Zusatzblinkleuchten in die Außenkontur des Fahrerhauses optisch und insbesondere aerodynamisch, zu integrieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf einen Frontabschnitt eines erfindungsgemäßen Nutzfahrzeugs,
- Fig. 2: einen Horizontalschnitt durch den Frontbereich entsprechend Schnittlinien II in Fig. 1.

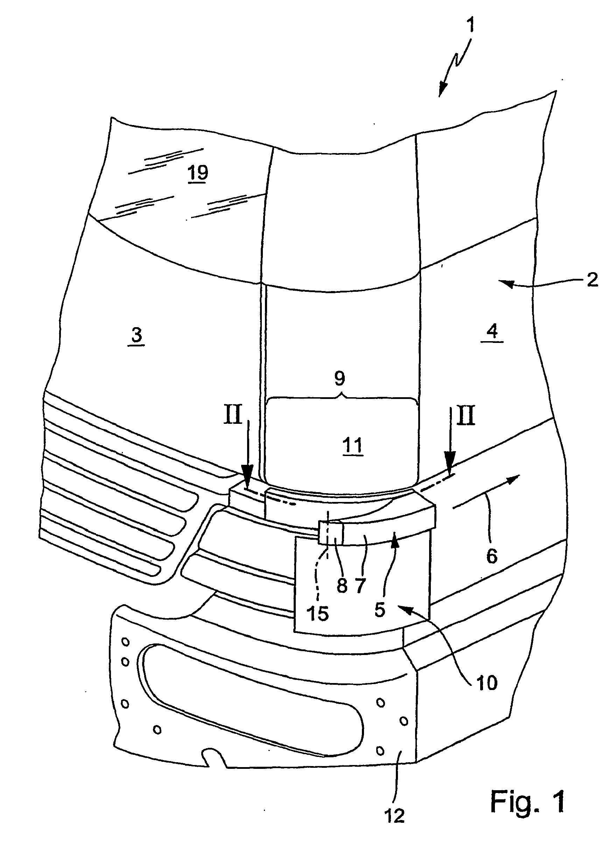

Entsprechend Fig. 1 besitzt ein nur in einem Frontabschnitt dargestelltes Nutzfahrzeug 1, insbesondere ein Lastkraftwagen, ein nur teilweise gezeigtes Fahrerhaus 2, das eine Frontseite oder Fahrzeugfront 3 und zwei Fahrzeugseiten 4 aufweist, von denen in Fig. 1 nur die dem Betrachter zugewandte dargestellt ist. Das Fahrerhaus 2 ist an jeder Fahrzeugseite 4 mit einer Zusatzblinkleuchte 5 ausgestattet, die sich dadurch kennzeichnet, dass sie bei ihrer Betätigung ihr Blinklicht entsprechend einem Pfeil 6 in Richtung Fahrzeugheck abstrahlt.

Die nachfolgende Beschreibung der gezeigten Zusatzblinkleuchte 5 bezieht sich sinngemäß stets auch auf die nicht gezeigte Zusatzblinkleuchte 5 der anderen Fahrzeugseite 4. Dabei ist klar, dass an jeder Fahrzeugseite 4 auch mehrere solcher Zusatzblinkleuchten 5 angeordnet sein können.

Die Zusatzblinkleuchte 5 besitzt ein Gehäuse 7; bzw. ist die Zusatzblinkleuchte 5 in einem Gehäuse 7 untergebracht. Dieses Gehäuse 7 ist am Fahrerhaus 2 mittels einer Halterung 8 gehaltert. Die Halterung 8 ist hier quasi in das Gehäuse 7 integriert.

Das Gehäuse 7 ist bei der hier gezeigten, bevorzugten Ausführungsform in einem durch eine geschweifte Klammer gekennzeichneten Übergangsbereich 9 am Fahrerhaus 2 angeordnet. In diesem Übergangsbereich 9 geht die Fahrzeugfront oder Frontseite 3 in die jeweilige Fahrzeugseite 4 über. In diesem Übergangsbereich 9 ist außerdem ein als Windleitdüse ausgebildetes Windleitelement 10 angeordnet. Das Gehäuse 7 ist unterhalb einer Frontscheibe 11 des Fahrerhauses 2 angeordnet.

Grundsätzlich kann das Gehäuse 7 unmittelbar am Fahrerhaus 2 bzw. an der Fahrzeugseite 4 angebracht sein. Bevorzugt wird jedoch eine Ausführungsform, bei welcher das Gehäuse 7 an einem Bauteil angebracht ist, das seinerseits an der Fahrzeugseite 4 angebracht ist, so dass das Gehäuse 7 indirekt an der Fahrzeugseite 4 angebracht ist. Im hier gezeigten Ausführungsbeispiel ist das Gehäuse 7 oben am Windleitelement 10 angebracht. Ebenso kann das Gehäuse 7 bei einer anderen Ausführungsform an einer Eckbeplankung 11 oder an einem Stoßfänger 12 angebracht sein. Durch die gewählte Anbringung des Gehäuses 7 am Windleitelement 10 ergibt sich für das Gehäuse 7 und somit für die darin untergebrachte Zusatzblinkleuchte 5 automatisch eine exponierte, das heißt, von der Fahrzeugseite 4 beabstandete Position. Des Weiteren kann das Gehäuse 7 zweckmäßig in eine Außenkontur des Fahrerhauses 2 hinsichtlich seiner Form und/oder aerodynamisch integriert sein. Bei der hier gezeigten Ausführungsform ist das Gehäuse 7 hinsichtlich seiner Form an die Kontur des Windleitelements 10 adaptiert.

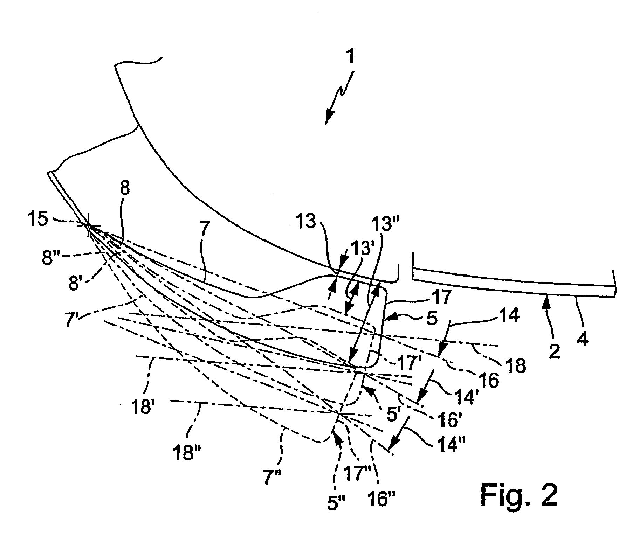

Entsprechend Fig. 2 ist das Gehäuse 7 mit Hilfe der Halterung 8 am Fahrerhaus 2 bzw. am Windleitelement 10 verstellbar gehaltert und zwar so, dass für die im Gehäuse 7 untergebrachte Zusatzblinkleuchte 5 mehrere unterschiedliche Abstände 13 bzw. 13' bzw. 13" und/oder mehrere verschiedene Abstrahlwinkel 14 bzw. 14' bzw. 14" relativ zur jeweiligen Fahrzeugseite 4 einstellbar sind. In Fig. 2 sind exemplarisch drei verschiedene Einstellungen des Gehäuses 7 dargestellt, wobei die Bezugszeichen in der Position mit dem kleinsten Abstand 13 bzw. mit dem kleinsten Abstrahlwinkel 14 unverändert sind, in der Position mit dem mittleren Abstand 13' bzw. mit dem mittleren Abstrahlwinkel 14' mit einem einfachen " ' " und in der Position mit dem größten Abstand 13" bzw. mit dem größten Abstrahlwinkel 14" mit einem Doppelstrich " ' " versehen sind.

Bei der hier gezeigten bevorzugten Ausführungsform ist das Gehäuse 7 um eine im wesentlichen vertikale Schwenkachse 15 relativ zum Fahrerhaus 2 schwenkbar gelagert. Die Schwenkachse 15 steht in Fig. 2 im wesentlichen senkrecht auf der Zeichnungsebene.

Durch Verschwenken des Gehäuses 7 um seine Schwenkachse 15 verändert sich der Abstand 13 sowie der Abstrahlwinkel 14 der Zusatzblinkleuchte 5. Der Abstrahlwinkel 14 wird dabei von der jeweiligen Fahrzeugseite 4 zu einer Geraden 16 gemessen, die einerseits durch die Schwenkachse 15 und andererseits an einem Lichtaustrittsende 17 des Gehäuses 7 eine Linie 18 schneidet, die für eine bestimmte Breite eines nicht gezeigten Aufbaus oder Aufliegers des Nutzfahrzeugs 1 einen gewünschten Mindestabstrahlwinkel definiert, den die Zusatzblinkleuchte 5 besitzen muss, um bei der jeweiligen Aufbau- bzw. Aufliegerbreite hinreichend sicher vom nachfolgenden Verkehr erkannt werden zu können. Dementsprechend sind in Fig. 2 drei verschiedene Mindest-Abstrahlwinkel 18, 18', 18 " eingetragen, die bei drei verschiedenen Aufbau- bzw. Aufliegerbreiten von der Zusatzblinkleuchte 5 erreicht werden müssen. Wie aus Ziff. 2 hervorgeht, kann die Blinkleuchte 5 ohne weiteres so weit um ihre Schwenkachse 15 verschwenkt werden, dass jeder dieser geforderten Abstrahlwinkel 18, 18', 18" einstellbar ist.

Des weiteren darf Abstralwinkel 14, 14', 14" einen gewünschten oder gesetzlich vorgeschriebenen Maximal-Abstrahlwinkel nicht überschreiten, der zwischen einem Bezugspunkt der Zusatzblinkleuchte 5 und einer Aufbaukante z.B. etwa 5° beträgt. Je weiter der genannte der genannte Bezugspunkt durch Verstellen oder Ausschwenken der Zusatzblinkleuchte 5 nach außen kommt, desto größer kann die Aufbaubreite gewählt werden.

Damit sich durch das Verschwenken des Gehäuses 7 eine effektive Veränderung des Abstands 13 bzw. des Abstrahlwinkels 14 ergibt, ist die Schwenkachse 15 an einem vom Lichtaustrittsende 17 entfernten Ende oder Endabschnitt des Gehäuses 7 angeordnet.

Durch die Einstellbarkeit des Abstands 13 bzw. des Abstrahlwinkels 14 kann das Fahrerhaus 2 ohne großen Aufwand an unterschiedlich breite Aufbauten oder Auflieger angepasst werden. Insbesondere vereinfacht sich dadurch die serienmäßige Herstellung unterschiedlicher Fahrzeug-Typen. Ebenso kann ein und dasselbe Fahrzeug 1 je nach Einsatz mit unterschiedlich breiten Aufbauten oder Aufliegern ausgestattet werden. Die dann erforderliche Anpassung der Zusatzblinkleuchten 5 kann mit Hilfe der Erfindung besonders einfach realisiert werden.

Zweckmäßig ist die Halterung 8 so ausgebildet, dass die jeweils eingestellte Relativlage zwischen Gehäuse 7 und Fahrerhaus 2 manuell oder mittels eines entsprechenden Werkzeugs arretierbar ist. Hierdurch kann sichergestellt werden, dass die eingestellte Relativlage sich im Fahrbetrieb nicht von selbst ändert.

Sofern das jeweilige Fahrzeug 1 zur Ankopplung unterschiedlich breiter Aufbauten und/oder Auflieger ausgestaltet ist, ist es zweckmäßig, die für die Zusatzblinkleuchten 5 einstellbaren Abstände 13 bzw. Abstrahlwinkel 14 so auszuwählen, dass für alle vorkommenden Aufbau- bzw. Aufliegerbreiten zumindest der erforderliche Mindestabstrahlwinkel 18 einstellbar ist. Das heißt, die Verstellbarkeit des Gehäuses 7 ist auf die möglichen Fahrzeug-Varianten abgestimmt.

Vorzugsweise kann die Halterung 8 eine Rasterung enthalten, so dass die Abstände 13 bzw. die Abstrahlwinkel 14 nicht stufenlos, sondern in einem vorgegebenen Rastermaß einstellbar sind. Zweckmäßig ist dieses Rastermaß auf die Standard-Breiten der mit dem Nutzfahrzeug 1 verbindbaren Aufbauten bzw. Auflieger abgestimmt. Auf diese Weise kann die Anpassung des Fahrerhauses 2 an die jeweiligen Aufbau- bzw. Aufliegerbreite besonders einfach und sicher durchgeführt werden.

Ein weiterer Vorteil des verstellbaren, insbesondere des verschwenkbaren Gehäuses 7 kann auch darin gesehen werden, dass die Zusatzblinkleuchte 5 eine erhöhte Zugänglichkeit besitzt, wenn ihr maximaler Abstand 13 bzw. ihr maximaler Abstrahlwinkel 14 eingestellt ist. Eine verbesserte Zugänglichkeit erleichtert Wartungsarbeiten, insbesondere das Austauschen von Leuchtmitteln, wie z.B. Glühbirnen. Bei einer zweckmäßigen Weiterbildung kann für das Gehäuse 7 außerdem eine Wartungsstellung vorgesehen sein, in welche das Gehäuse 7 verstellbar ist. Für diese Wartungsstellung ist der Abstand 13 bzw. der Abstrahlwinkel 14 so groß gewählt, dass die Zusatzblinkleuchte 5 eine besonders hohe Zugänglichkeit für Wartungsarbeiten oder dergleichen aufweist. Dabei können Abstand 13 bzw. Abstrahlwinkel 14 in dieser Wartungsstellung so groß sein, dass in dieser Wartungsstellung kein ordnungsgemä-ßer Fahrbetrieb des Fahrzeugs 1 möglich ist, das bedeutet, dass die Wartungsstellung keine Betriebsstellung ist, sondern einen unzulässig großen Abstand 13 bzw. einen unzulässig gro-ßen Abstrahlwinkel 14 aufweist.

## Patentansprüche

1. Nutzfahrzeug, insbesondere Lastkraftwagen,
- mit einem Fahrerhaus (2), an dem an jeder Fahrzeugseite (4) wenigstens eine Zusatzblinkleuchte (5) angebracht ist, die bei ihrer Betätigung ihr Blinklicht (6) in Richtung Fahrzeugheck abstrahlt,
- wobei jede Zusatzblinkleuchte (5) in einem Gehäuse (7) untergebracht ist, das am Fahrerhaus (2) verstellbar gehaltert ist, derart, dass für die jeweilige Zusatzblinkleuchte (5) mehrere Abstände (13) und/oder Abstrahlwinkel (14) zur jeweiligen Fahrzeugseite (4) einstellbar sind,
- wobei jedes Gehäuse (7) um eine im wesentlichen vertikale Schwenkachse (15) schwenkverstellbar am Fahrerhaus (2) gelagert ist,
- wobei die jeweilige Schwenkachse (15) in einem Abschnitt des jeweiligen Gehäuses (7) angeordnet ist, der von einem Lichtaustrittsende (17) des jeweiligen Gehäuses (7) entfernt ist,
- wobei das jeweilige Gehäuse (7) in einem Übergangsbereich (9), in dem eine Fahrzeugfront (3) in die jeweilige Fahrzeugseite (4) übergeht, am Fahrerhaus (2) angeordnet ist,
- wobei das jeweilige Gehäuse (7) unterhalb einer Frontscheibe (19) des Fahrerhauses (2) angeordnet ist.

2. Nutzfahrzeug nach Anspruch 1,
**dadurch gekennzeichnet,**
**dass** eine Halterung (8), mit der das jeweiligen Gehäuse (7) verstellbar am Fahrerhaus (2) gehaltert ist, so ausgebildet ist, dass die jeweils eingestellte Relativlage des Gehäuses (7) arretierbar ist.

3. Nutzfahrzeug nach Anspruch 1 oder 2,
**dadurch gekennzeichnet,**
**dass** das jeweilige Gehäuse (7) an einem Stoßfänger (12) oder an einem Windleitelement (10) oder an einer Eckbeplankung (11) des Fahrerhauses (2) angeordnet ist.

4. Nutzfahrzeug nach einem der Ansprüche 1 bis 3,
**dadurch gekennzeichnet,**
**dass** das jeweilige Gehäuse (7) in eine Außenkontur des Fahrerhauses (2) aerodynamisch integriert ist.

5. Nutzfahrzeug nach einem der Ansprüche 1 bis 4,
**dadurch gekennzeichnet,**
**dass** das Nutzfahrzeug (1) hinter dem Fahrerhaus (2) zur Ankopplung unterschiedlicher Aufbauten oder Auflieger ausgebildet ist, die sich hinsichtlich ihrer Breite voneinander unterscheiden, wobei die für die Zusatzblinkleuchten (5) einstellbaren Abstände (13) und/oder Abstrahlwinkel (14) auf diese unterschiedlichen Breiten abgestimmt sind.

6. Nutzfahrzeug nach Anspruch 5,
**dadurch gekennzeichnet,**
**dass** das Gehäuse (7) gerastert verstellbar ist, wobei ein Rastermaß, das die für die Zusatzblinkleuchten (5) einstellbaren Abstände (13) und/oder Abstrahlwinkel (14) vorgibt, auf die unterschiedlichen Breiten der Aufbauten oder Auflieger abgestimmt ist.

7. Nutzfahrzeug nach einem der Ansprüche 1 bis 6,
**dadurch gekennzeichnet,**
**dass** jedes Gehäuse (7) in eine Wartungsstellung verstellbar ist, in der die jeweilige Zusatzblinkleuchte (5) einen für einen ordnungsgemäßen Fahrbetrieb unzulässig gro-ßen Abstand (13) und/oder Abstrahlwinkel (14) aufweist
und die für Wartungsarbeiten an der jeweiligen Zusatzblinkleuchte (5) geeignet ist.

## Claims

1. Commercial vehicle, especially heavy goods vehicle,
- with a driver's cab (2) on which, on each vehicle side (4), at least one additional indicator (5) is fitted which, when it is actuated, radiates its indicating light (6) in the direction of the vehicle rear,
- each additional indicator (5) being accommodated in a housing (7) which is secured adjustably on the driver's cab (2) in such a manner that a plurality of distances (13) and/or angles of radiation (14) to the respective vehicle side (4) can be set for the respective additional indicator (5),
- each housing (7) being mounted on the driver's cab (2) in a manner such that it can be adjusted by pivoting about an essentially vertical pivot axis (15),
- the respective pivot axis (15) being arranged in a section of the respective housing (7) that is remote from a light exit end (17) of the respective housing (7),
- the respective housing (7) being arranged on the driver's cab (2) in a transition region (9) in which a vehicle front (3) merges into the respective vehicle side (4),
- the respective housing (7) being arranged below a windscreen (19) of the driver's cab (2).

2. Commercial vehicle according to Claim 1, **characterized in that** a securing means (8), with which the respective housing (7) is secured adjustably on the driver's cab (2), is designed in such a manner that the respectively set relative position of the housing (7) can be locked.

3. Commercial vehicle according to Claim 1 or 2, **characterized in that** the respective housing (7) is arranged on a bumper (12) or on a wind-directing element (10) or on a corner planking (11) of the driver's cab (2).

4. Commercial vehicle according to one of Claims 1 to 3, **characterized in that** the respective housing (7) is integrated aerodynamically in an outer contour of the driver's cab (2).

5. Commercial vehicle according to one of Claims 1 to 4, **characterized in that** the commercial vehicle (1) is designed behind the driver's cab (2) for the coupling of different superstructures or semitrailers which differ from one another with regard to their width, with the distances (13) and/or angles of radiation (14) that can be set for the additional indicators (5) being matched to these different widths.

6. Commercial vehicle according to Claim 5, **characterized in that** the housing (7) can be adjusted in the manner of a grid, with a grid dimension which predetermines the distances (13) and/or angles of radiation (14) that can be set for the additional indicators (5) being matched to the different widths of the superstructures or semitrailers.

7. Commercial vehicle according to one of Claims 1 to 6, **characterized in that** each housing (7) can be adjusted into a maintenance position in which the respective additional indicator (5) has a distance (13) and/or angle of radiation (14) which is impermissibly large for a correct driving operation and which is suitable for maintenance work to the respective additional indicator (5).

## Revendications

1. Véhicule utilitaire, en particulier camion,
- comprenant une cabine de conduite (2) sur laquelle est disposé, de chaque côté (4) du véhicule, au moins un clignotant supplémentaire (5) qui, lors de son actionnement, diffuse la lumière de son clignotant (6) en direction de l'arrière du véhicule,
- où chaque clignotant supplémentaire (5) est logé dans un carter (7) qui est fixé de manière orientable sur la cabine de conduite (2), de manière telle que, pour le clignotant supplémentaire respectif (5), plusieurs écartements (13) et/ou angles de rayonnement (14) soient réglables par rapport au côté respectif (4) du véhicule,
- où chaque carter (7) est placé sur la cabine de conduite (2) en étant orientable par pivotement autour d'un axe de pivotement (15) pratiquement vertical,
- où l'axe de pivotement respectif (15) est disposé dans une partie du carter respectif (7), qui est éloignée d'une extrémité de sortie de lumière (17) du carter respectif (7),
- où le carter respectif (7) est disposé sur la cabine de conduite (2), dans une zone de transition (9) dans laquelle une partie avant (3) passe dans le côté respectif (4) du véhicule,
- où le carter respectif (7) est disposé au-dessous d'un pare-brise (19) de la cabine de conduite (2).

2. Véhicule utilitaire selon la revendication 1, **caractérisé en ce qu'**une fixation (8), avec laquelle le carter respectif (7) est fixé sur la cabine de conduite (2), de façon orientable, est conçue de manière telle, que la position relative du carter (7), respectivement réglée, puisse être verrouillée.

3. Véhicule utilitaire selon la revendication 1 ou 2, **caractérisé en ce que** le carter respectif (7) est disposé sur un pare-chocs (12) ou sur un élément déflecteur (10) ou sur un panneau angulaire (11) de la cabine de conduite (2).

4. Véhicule utilitaire selon l'une quelconque des revendications 1 à 3, **caractérisé en ce que** le carter respectif (7) est intégré, de façon aérodynamique, dans un contour extérieur de la cabine de conduite (2).

5. Véhicule utilitaire selon l'une quelconque des revendications 1 à 4, **caractérisé en ce que** le véhicule utilitaire (1), derrière la cabine de conduite (2), est conçu pour l'attelage de différents éléments de superstructure ou semi-remorques qui se différencient les uns des autres, concernant leur largeur, où les écartements (13) et/ou angles de rayonnement (14), réglables pour les clignotants supplémentaires (5), sont réglés sur les différentes largeurs.

6. Véhicule utilitaire selon la revendication 5, **caractérisé en ce que** le carter (7) est orientable en étant tramé, où une mesure de trame, qui prédéfinit les écartements (13) et/ou angles de rayonnement (14) réglables pour les clignotants supplémentaires (5), est réglée sur les différentes largeurs des éléments de superstructure ou semi-remorques.

7. Véhicule utilitaire selon l'une quelconque des revendications 1 à 6, **caractérisé en ce que** chaque carter (7) est orientable dans une position d'entretien dans laquelle le clignotant supplémentaire respectif (5) présente un grand écartement (13) et/ou angle de rayonnement (14) non admissible pour une conduite réglementaire du véhicule, et qui est appropriée pour des travaux d'entretien sur le clignotant supplémentaire respectif (5).
